(19) Europäisches Patentamt
European Patent Office
Office européen des brevets

(11) **EP 2 045 572 B1**

(12) **EUROPÄISCHE PATENTSCHRIFT**

(45) Veröffentlichungstag und Bekanntmachung des Hinweises auf die Patenterteilung:
**14.03.2012 Patentblatt 2012/11**

(51) Int Cl.:
*G01B 9/02* *(2006.01)*     *G01B 11/02* *(2006.01)*

(21) Anmeldenummer: **07019476.6**

(22) Anmeldetag: **04.10.2007**

(54) **Vorrichtung zur Positionserfassung**

Apparatus for determining a position

Dispositif pour la détection de la position

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**08.04.2009 Patentblatt 2009/15**

(73) Patentinhaber: **Attocube Systems AG**
**80539 München (DE)**

(72) Erfinder: **Karrai, Khaled**
**80337 München (DE)**

(74) Vertreter: **Patentanwälte Lambsdorff & Lange**
**Dingolfinger Strasse 6**
**81673 München (DE)**

(56) Entgegenhaltungen:
**WO-A-2006/127952     DE-A1- 4 209 260**
**DE-A1-102005 022 876     US-A1- 2002 131 048**

• **MINONI U ET AL: "A HIGH-FREQUENCY SINUSOIDAL PHASE-MODULATION INTERFEROMETER USING AN ELECTRO-OPTIC MODULATOR: DEVELOPMENT AND EVALUATION" REVIEW OF SCIENTIFIC INSTRUMENTS, AIP, MELVILLE, NY, US, Bd. 62, Nr. 11, 1. November 1991 (1991-11-01), Seiten 2579-2583, XP000271041 ISSN: 0034-6748**

## Beschreibung

Die Erfindung betrifft eine Vorrichtung zur Positionserfassung sowie eine Anordnung aus einem Positionierer und einer Vorrichtung zur Positionserfassung aufweist.

In vielen Anwendungsbereichen ist es erforderlich, die Position eines Objektes oder einen von diesem zurückgelegten Weg zu erfassen. Beispielsweise müssen in der Förder- und Automatisierungstechnik Positionen von Objekten überwacht und ausgewertet werden. Ein spezielles Einsatzgebiet, bei welchem die Genauigkeit der Positionserfassung von besonderer Bedeutung ist, ist die Positioniertechnik, bei welcher ein Objekt gezielt und definiert verfahren wird. Derartige Positionierer kommen beispielsweise in der Forschung und Industrie zum Einsatz. Neben einer möglichst hohen Reproduzierbarkeit und Skalierbarkeit von Bewegungswegen spielen Eigenschaften wie Erschütterungs-Unempfindlichkeit, Robustheit und Kompaktheit des Aufbaus im praktischen Gebrauch eine wesentliche Rolle.

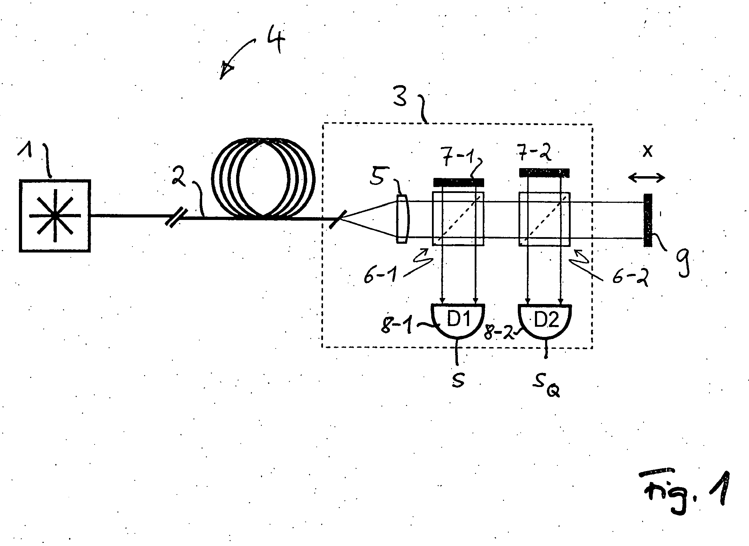

Es ist bereits bekannt, eine Positionserfassung auf optischem Wege mittels eines Michelson Interferometers durchzuführen. Fig. 1 zeigt den Aufbau eines Doppel-Michelson Interferometers 4, das für eine Positionserfassung nach der Quadratur-Detektionmethode ausgelegt ist. Ein Laser 1 erzeugt Laserlicht der Wellenlänge $\lambda$, das über eine optische Faser 2 zu dem Interferometerkopf 3 des Doppel-Michelson Interferometers 4 geleitet wird. Der Interferometerkopf 3 weist eine Kollimatorlinse 5, zwei Strahlteiler 6-1, 6-2, zwei Referenzspiegel 7-1, 7-2 sowie zwei Detektoren 8-1, 8-2 auf. Das aus dem Faserende der optischen Faser 2 austretende Laserlicht wird mittels der Kollimatorlinse 5 in ein paralleles Lichtbündel aufgeweitet. Das parallele Lichtbündel durchläuft den ersten Strahlteiler 6-1 und zweiten Strahlteiler 6-2 und wird von einem Spiegel 9 reflektiert. Der Spiegel 9 befindet sich an einem Objekt (nicht dargestellt), dessen Position in Bezug auf die x-Richtung (siehe Doppelpfeil) zu überwachen ist. Das von dem Spiegel 9 reflektierte Licht durchläuft wiederum die beiden Strahlteiler 6-1 und 6-2, wobei ein Teil des reflektierten Lichtes jeweils auf die Detektoren 8-1, 8-2 reflektiert wird. Dabei interferiert ein im Strahlteiler 6-1, 6-2 zu dem jeweiligen Detektor 8-1, 8-2 reflektiertes Lichtbündel mit dem von dem jeweiligen Referenzspiegel 7-1, 7-2 reflektierten Lichtbündel. Die Detektoren 8-1, 8-2 erfassen die Intensität des Interferenzmusters. Jedes Messsignal oszilliert periodisch in Abhängigkeit von der Verschiebung x mit einer Periodizität, die durch die halbe Längenwelle $\lambda/2$ des Laserlichts gegeben ist.

Wenn die Referenzspiegel 7-1, 7-2 so angeordnet sind, dass der Abstand zwischen ihren Spiegelebenen Inkremente von $\lambda/8 + N\lambda/2$ ist, wobei N = 0, 1, 2, 3, ..., ergibt sich für das Ausgangssignal des Detektors 8-1 die Funktion

$$s = \cos(4\pi x/\lambda) \qquad\qquad (1)$$

und für das Ausgangssignal des Detektor 8-2 die Funktion

$$s_Q = \sin(4\pi x/\lambda) \; . \qquad\qquad (2)$$

Zunächst wird der (in Fig. 1 nicht dargestellte) Fall betrachtet, dass der Interferometerkopf 3 nur ein Interferometer (z.B. bestehend aus dem Strahlteiler 6-1, dem Referenzspiegel 7-1 und dem Detektor 8-1) umfasst. In diesem Fall wird nur das Ausgangssignal s bereitgestellt. Dieses eine Ausgangssignal s wiederholt sich nach $\lambda/2$. Für viele Anwendungen ist jedoch nachteilig, dass die Bestimmung des Verschiebeweges x anhand dieses einen Signals s keine Bestimmung der Verschieberichtung ermöglicht und eine mit x variierende Genauigkeit aufweist (im Bereich der Extrema der Kosinusfunktion ist die Verschiebeweg-Bestimmung mit einer wesentlich geringeren Genauigkeit als in den dazwischen liegenden Flankenbereichen möglich).

Durch die Methode der Quadratur-Detektion-Detektion werden diese beiden Nachteile beseitigt. Hierfür wird das Signal $s_Q$ des zweiten Detektors 8-2 ebenfalls ausgewertet.

Die Auswertung der beiden Signale s und $s_Q$ ermöglicht sowohl die Bestimmung der Verschieberichtung als auch eine gleichbleibende Genauigkeit bei der Ermittlung des Verschiebewegs x. Der hierfür zu zahlende Preis besteht darin, dass eine zweikanalige Messanordnung (zwei Michelson Interferometer mit zwei Detektoren 8-1, 8-2) benötigt wird.

Darüber hinaus ist das in Fig. 1 dargestellte Doppel-Michelson Interferometer 4 nicht miniaturisierbar. Der Grund hierfür besteht darin, dass die Strahlteiler 6-1, 6-2 und die Referenzspiegel 7-1, 7-2 zur Vermeidung von Dejustagen in einer massiven und daher relativ groß bauenden Einheit ausgeführt sein müssen. Die Abmessungen der kompaktesten gegenwärtig erhältlichen Doppel-Michelson Interferometer betragen typischerweise 10 × 10 × 5 cm. Da es nicht möglich ist, das Licht innerhalb der Messstrecke (d.h. zwischen dem Spiegel 9 und den Strahlteilern 6-1, 6-2) in einer optischen Faser zu leiten (aufgrund von Temperatureffekten und mechanischer Beanspruchung würden Fluktuationen des optischen Index der Faser auftreten, die äquivalent zu Längenänderungen der Messstrecke sind), muss der Interferometerkopf immer in der Nähe und in einer vorgegebenen, definierten Lage zu dem zu überwachenden Objekt angeordnet sein. Damit sind eine Vielzahl von Anwendungen, z.B. in kleineren abgeschlossenen Systemen, nicht möglich, da der Interferometerkopf 3 nicht außerhalb des abgeschlossenen Systems angeordnet und das Messlicht über eine Glasfaser in das System geleitet werden kann.

Die Schrift DE 42 09 260 A1 offenbart eine Einrichtung zur Längenmessung, welche einen durchstimmbaren Laser zur Erzeugung eines Wellenfeldes sowie ein Michelson-Interferometer zur Ermittlung der Messstreckenlänge aufweist. Die Bestimmung der Messstreckenlänge erfolgt auf dem Prinzip der Quadratur-Demodulation des Interferometersignals.

Eine der Erfindung zugrunde liegende Aufgabe besteht darin, eine Vorrichtung zu schaffen, die eine Positionserfassung eines Objektes in einfacher Weise ermöglichen. Insbesondere soll eine Positionserfassung mit hoher Genauigkeit möglich sein.

Die Aufgabenstellung wird durch die Merkmale des Anspruchs 1 gelöst. Vorteilhafte Ausgestaltungen der Erfindung sind in den abhängigen Ansprüchen angegeben.

Eine Vorrichtung zur Positionserfassung umfasst eine durchstimmbare Lichtquelle zur Erzeugung eines Wellenfeldes in einer Messstrecke. Ferner weist die Vorrichtung eine Wellenfeld-Variationseinrichtung zur zeitlichen Variation der Wellenlänge des Wellenfeldes auf. Darüber hinaus umfasst die Vorrichtung ein Fabry-Perot Interferometer, welches ein von der Messstreckenlänge abhängiges Interferenzmuster des Wellenfeldes erzeugt, sowie einen Detektor, der in Abhängigkeit von dem detektierten Interferenzmuster ein Messsignal erzeugt. Eine Auswerteschaltung wertet das Messsignal in Abhängigkeit von der zeitlichen Variation aus. Das Fabry-Perot Interferometer weist eine Finesse auf, die kleiner als 1,0, insbesondere kleiner als 0,5 ist.

Die Auswerteschaltung kann zweckmäßigerweise ausgelegt sein, das Messsignal mit einer ersten Frequenz zu demodulieren, die von der zeitlichen Variation abhängig ist, und das Messsignal mit einer zweiten Frequenz zu demodulieren, die von der zeitlichen Variation abhängig ist und unterschiedlich zu der ersten Frequenz ist. Eine solche Vorrichtung kann eine Positionserfassung nach der Quadratur-Detektionsmethode durchführen, wobei hierfür nur ein Interferometer und nur ein Detektor benötigt werden. Die für die Quadratur-Detektionsmethode erforderlichen zwei Signale werden in der Auswerteschaltung durch die beiden unterschiedlichen Demodulationen des Messsignals erzeugt.

Das Fabry-Perot Interferometer bietet ein hohes Miniaturisierungspotential. Da auch im Falle der Anwendung der Quadratur-Detektionsmethode nur ein Interferometer benötigt wird, ist - anders als im Stand der Technik - der Einsatz eines Fabry-Perot Interferometers möglich. Eine Anordnung umfasst einen Positionierer und eine optische Positionserfassungseinrichtung zur Erfassung einer Positionierstellung des Positionierers. Ein Vorteil dieser Anordnung besteht darin, dass sie aufgrund der Verwendung eines Fabry-Perot Interferometers in hohem Maße miniaturisierbar ist und aufgrund der Quadratur-Detektion eine genaue und die Verschieberichtung des Positionierers ermittelnde Positionserfassungseinrichtung ermöglicht. Damit kann eine solche Anordnung für vielerlei Anwendungen infrage kommen, in denen bisher eine Positionserfassung nur mit hohem apparativen Aufwand, ungenau oder gar nicht möglich war. Beispielsweise kann diese Anordnung einen Positionierer im Sub-Millimeter-Bereich oder im Sub-Mikrometer-Bereich aufweisen.

Die Erfindung wird nachfolgend in beispielhafter Weise unter Bezugnahme auf die Zeichnungen beschrieben, in diesen zeigen:

Fig. 1     eine schematische Darstellung des Aufbaus eines be- kannten Doppel-Michelson Interferometers;

Fig. 2     eine schematische Prinzipdarstellung einer Vorrichtung zur Positionserfassung;

Fig. 3     eine schematische Prinzipdarstellung einer weiteren Vorrichtung zur Positionserfassung;

Fig. 4     Schaubilder der bei einer Quadratur-Detektion er- haltenen Signale und deren Auswertung;

Fig. 5     eine schematische Darstellung einer Vorrichtung zur Positionserfassung mit Michelson-Interferometer;

Fig. 6     eine schematische Darstellung einer weiteren Vor- richtung zur Positionserfassung mit Michelson- Interferometer;

Fig. 7     eine schematische Darstellung eines Ausführungsbei- spiels der Erfindung; und

Fig. 8     eine schematische Darstellung eines Positionierers für eine Translationsbewegung.

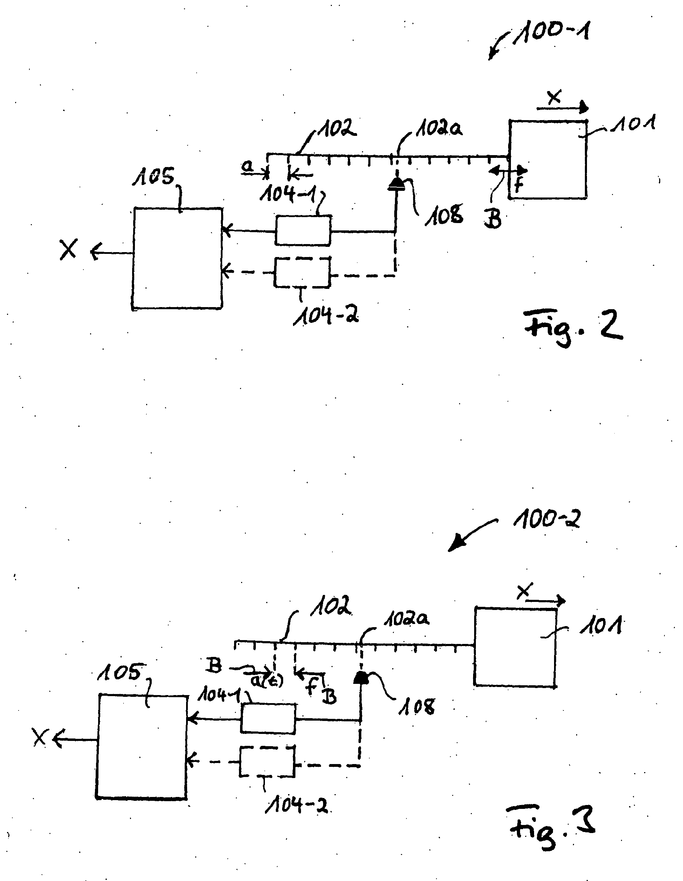

Fig. 2 zeigt eine Prinzipdarstellung einer nicht beanspruchten Positionserfassungsvorrichtung 100-1. Ein Objekt 101 ist entlang einer Richtung x beweglich. Zur Erfassung des Ortes bzw. der Bewegung des Objektes 101 ist ein Längenraster 102 vorgesehen. Dieses Längenraster 102 kann, wie bereits erwähnt, in verschiedenster Art und Weise realisiert sein, z.B. durch ein Wellenfeld oder durch einen Gegenstand mit einer aufgeprägten Rasterteilung. Die Positionserfassungsvorrichtung 100-1 umfasst einen Detektor 108, welcher das Längenraster 102 an einem bestimmten Ort 102a beobachtet. Die Beobachtung kann auf optischem oder anderem Wege (z.B. auch mechanisch oder durch Erfassung eines durch das Raster bewirkten Magnetfeldes usw.) erfolgen. Ein Ausgangssignal des Detektors 108 wird in einem ersten Demodulator 104-1 demoduliert. Das bei der Demodulation erzeugte Signal wird einer Auswerteeinheit 105 zugeleitet, die eine Information x betreffend den Ort oder eines zurückgelegten Wegs des Objektes 101 ausgibt. Für den Fall einer Quadratur-Detektion wird das von dem Detektor 108 ausgegebene Messsignal ferner einem zweiten Demodulator 104-2 zugeführt. Dieser erzeugt ebenfalls ein demoduliertes Signal, welches der Auswerteeinheit 105 zugeleitet wird und für die Auswertung nach dem Prinzip der Quadratur-Detektion herangezogen wird.

In der in Fig. 2 dargestellten Positionserfassungsvorrichtung 100-1 wird ein Längenraster 102 mit einer zeitlich konstanten Rasterweite a betrachtet. Das Längenraster 102 soll sich mit dem Objekt 101 mitbewegen, d.h. eine Translation des Objektes 101 wird in eine entsprechende Translation des Längenrasters 102 übertragen. Dieser durch die Objektbewegung verursachten Translation des Längenrasters 102 soll eine zusätzliche Bewegungskomponente überlagert sein, die durch eine z.B. periodische Schwingungsbewegung des Längenrasters 102 beschrieben werden kann. Diese Schwingungsbewegung parallel zur Translationsrichtung ist durch den Doppelpfeil B veranschaulicht. Beispielsweise kann das Längenraster 102 parallel zu der Verschieberichtung x mit der Frequenz f relativ zu dem Objekt 101 oszillieren. In diesem Fall ist der von dem Detektor 108 beobachtete Punkt 102a auf dem Längenraster 102 sowohl abhängig von der Position des Objekts 101 als auch von der überlagerten Schwingungsbewegung des Längenrasters 102. Die Demodulation in dem ersten Demodulator 104-1 und die Demodulation in dem zweiten Demodulator 104-2 erfolgt in Abhängigkeit von der überlagerten periodischen Bewegung des Längenrasters 102. Die Demodulation in den Demodulatoren 104-1 und 104-2 berücksichtigt die Schwingungsbewegung mit der Frequenz f in jeweils unterschiedlicher Weise, z.B. indem in dem ersten Demodulator 104-1 eine Demodulation mit der Frequenz f erfolgt und in dem zweiten Demodulator 104-2 eine Demodulation mit der Frequenz 2f erfolgt. Dadurch werden von den beiden Demodulatoren 104-1 und 104-2 auf zwei unterschiedliche Weisen demodulierte Signale bereitgestellt, die, wie im Folgenden noch näher erläutert, eine Ortsbestimmung des Objektes 101 nach dem Prinzip der Quadratur-Detektion ermöglichen. Die Ortsbestimmung des Objektes 101 (ohne Quadratur-Detektion) ist jedoch ebenfalls möglich, und zwar bereits dann, wenn nur ein einziger Demodulator 104-1 zur Demodulation des Messsignals eingesetzt wird.

Fig. 3 zeigt eine Prinzipdarstellung einer weiteren nicht beanspruchten Positionserfassungsvorrichtung 100-2. Dieselben oder ähnliche Teile sind mit den gleichen Bezugszeichen bezeichnet. Die Positionserfassungsvorrichtung 100-2 unterscheidet sich von der Positionserfassungsvorrichtung 100-1 im Wesentlichen nur dadurch, dass der durch das Objekt 101 bewirkten Translationsbewegung des Längenrasters 102 nunmehr eine Bewegungskomponente überlagert ist, die durch eine sich zeitlich ändernden Rasterweite a(t) beschrieben werden kann. Die zeitliche Änderung der Rasterweite a(t) kann ebenfalls durch eine zeitliche periodische Schwingung mit einer bestimmten Amplitude beschrieben werden. Diese Schwingungsbewegung parallel zur Translationsrichtung wird durch die beiden Pfeile B veranschaulicht.

Eine Möglichkeit, sich ein derartiges gleichsam expandierendes und kontrahierendes Längenraster 102 vorzustellen, besteht darin, dass das Längenraster 102 aus einem elastischen Material ist und mechanisch gedehnt bzw. kontrahiert wird. In vielen Fällen ist ein Längenraster 102 mit sich z.B. periodisch mit der Frequenz f ändernder Rasterweite a(t) durch ein von einer Wellenfeldquelle erzeugtes Wellenfeld der Wellenlänge $\lambda(t)$ repräsentiert, wobei die Wellenlänge $\lambda(t)$ mit der Frequenz f moduliert wird. Wie bei der ersten Positionserfassungsvorrichtung 100-1 ist der vom Detektor 108 beobachtete Punkt 102a des Längenrasters 102 sowohl von der Objektposition x als auch von der Modulation des Längenrasters 102 abhängig. Die Demodulation des von dem Detektor 108 gelieferten Messsignals kann bei der Positionserfassungsvorrichtung 100-2 wie bei der ersten Positionserfassungsvorrichtung 100-1 (Fig. 2) erfolgen. Die Ortsbestimmung des Objektes 101 kann auch hier entweder durch einen einzigen Demodulator 104-1 oder durch beide Demodulatoren 104-1, 104-2 (für eine Quadratur-Detektion) vorgenommen werden.

Mit anderen Worten kann das Längenraster 102 sowohl eine z.B. periodische Verlagerung seines Ursprungs (Fig. 2) als auch eine z.B. periodische Veränderung der Rasterweite a(t), siehe Fig. 3, vollziehen. Wird das Längenraster 102 durch ein Wellenfeld (z.B. elektromagnetische Welle) realisiert, entspricht die periodische zeitliche Veränderung der Lage des Längenrasters gegenüber einem Bezugspunkt bei zeitlich konstanter Wellenlänge einer Modulation der Wegphase des Wellenfeldes, während die periodische zeitliche Veränderung der Rasterweite des Längenrasters einer Modulation der Wellenlänge des Wellenfeldes entspricht. Es ist auch möglich, sowohl eine zeitliche Veränderung der Lage des Längenrasters gegenüber einem Bezugspunkt als auch eine Modulation der Rasterweite des Längenrasters 102 vorzusehen. Anschaulich gesprochen kann die Modulation des Längenrasters 102 bewirken, dass das Längenraster 102 als Ganzes eine Schwingungsbewegung durchführt (Fig. 2) oder eine oszillatorische Expansions- und Kontraktionsbewegung vollzieht (Fig. 3) oder eine der Translationsbewegung überlagerte Bewegung ausführt, die selbst eine Überlagerung dieser beiden oszillatorischen Bewegungsformen ist.

Die Figuren 2 und 3 zeigen somit Vorrichtungen 100-1, 100-2 zur Positionserfassung, die jeweils ein auf eine Messstrecke angewandtes Längenraster 102 sowie eine die Bewegung B erzeugende Längenraster-Variationseinrichtung (nicht explizit dargestellt) zur zeitlichen Variation bzw. Modulation des Längenrasters 102 aufweisen. Der Detektor 108 beobachtet das von der Messstreckenlänge und der zeitlichen Variation abhängige Längenraster 102 an einem

EP 2 045 572 B1

bestimmten, festen Punkt 102a (bezogen auf das Bezugssystem, in dem sich das Objekt 101 bewegt) und erzeugt das Messsignal. Die Vorrichtungen 100-1, 100-2 können Auswerteeinheiten 104-1, gegebenenfalls 104-2 und 105 aufweisen, die das Messsignal in Abhängigkeit von der zeitlichen Variation des Längenrasters 102 auswerten.

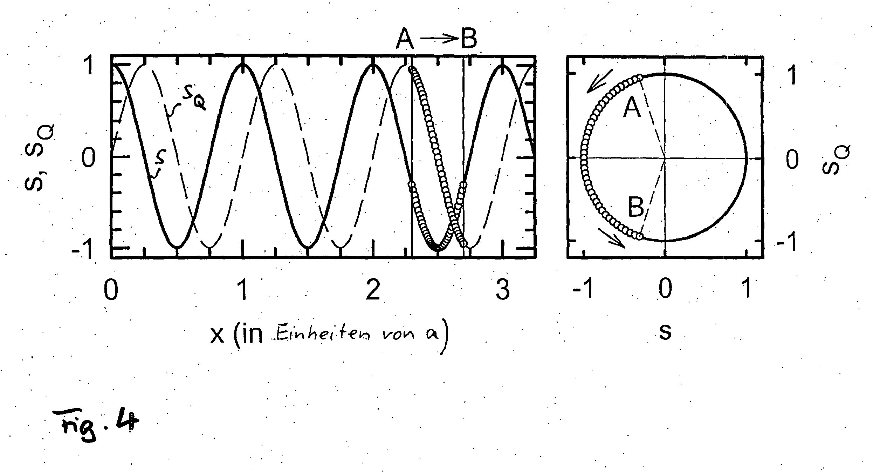

Fig. 4 veranschaulicht das Prinzip der Quadratur-Detektion anhand von zwei Schaubildern. Im linken Teil der Fig. 4 sind die zwei Signale s und $s_Q$ gegenüber dem Bewegungsweg x in Einheiten der Rasterweite a dargestellt. Ohne Beschränkung der Allgemeinheit wird im Folgenden angenommen, dass die Modulation mit der Frequenz f des Längenrasters mit einer Kosinusfunktion erfolgt. Das normierte Signal s ist dann

$$s = \cos(kx) \, , \tag{3}$$

wobei k über k = 2π/a mit der Rasterweite a in Beziehung steht. Ein solches Signal s wiederholt sich an den Punkten, an denen x ein ganzzahliges Vielfaches von a ist, und ermöglicht daher die Messung einer Wegverschiebung x in ganzzahligen Einheiten von a. Bei einem durch ein Wellenfeld erzeugten Längenraster kann die Rasterweite a durch die Wellenlänge λ über die Gleichung

$$a = \lambda/2 \tag{4}$$

vorgegeben sein.

Wird allein das Vorzeichen des Signals s betrachtet, können Verschiebungswege x in Einheiten von a/2 bestimmt werden. Es ist jedoch nicht möglich, allein mit dem Signal s eine Information über die Richtung der Verschiebung zu erlangen.

Die Verschiebungsrichtung kann jedoch bestimmt werden, sofern ein Signal $s_Q$ des Typs

$$s_Q = \sin(kx) \tag{5}$$

vorliegt.

Durch die gleichzeitige Messung von s und $s_Q$ kann die Bewegungsrichtung eindeutig bestimmt werden und die Positionsauflösung wird auf Inkremente von a/4 verbessert, siehe den linken Teil der Fig. 4. Bei herkömmlichen Positionserfassungs-Einrichtungen, die die Quadratur-Detektion anwenden, wird das Signal $s_Q$ dadurch erzeugt, dass die Positionserfassungsvorrichtung mit einem zweiten Messkanal ausgerüstet wird, bezüglich welchem das Längenraster gegenüber dem ersten Messkanal um eine Distanz von (N + 1/4)a mit N = 0, 1, 2, 3, ... verschoben ist. Wie in Fig. 1 gezeigt weist ein herkömmliches Doppel-Michelson Interferometer einen solchen zweikanaligen Aufbau auf.

Innerhalb eines Inkrements a/4 ist eine wesentlich höhere Ortsauflösung erhältlich. In Fig. 4, rechte Seite, sind die Signale s und $s_Q$ auf den x- und y-Achsen eines Oszilloskops dargestellt. Bei einer Bewegung des Objektes 101 entlang der Bewegungsrichtung x bewegt sich der Punkt im Oszilloskop entlang einer Kreisbahn. Eine vollständige Kreisbahn wird erreicht, wenn der Bewegungsweg x der Rasterweite a entspricht. Die Drehrichtung des Punktes im Oszilloskop gibt eindeutig die Bewegungsrichtung des Objektes an. Bewegt sich das Objekt 101 entlang der x-Richtung von einem Punkt A zu einem Punkt B, folgt daraus eine Bewegung des Punktes im Oszilloskop entlang eines Kreisausschnitts von A nach B entgegen dem Uhrzeigersinn. Eine Bewegung des Objektes 101 von dem Punkt B zu dem Punkt A im linken Teil der Fig. 4 würde eine Bewegung des Bildpunktes im Oszilloskop von dem Punkt B zu dem Punkt A im Uhrzeigersinn hervorrufen. Darüber hinaus wird deutlich, dass die Position des Punktes entlang der kreisförmigen Bahn eine Bestimmung der Objektposition ermöglicht, deren Genauigkeit nur noch durch das Rauschen der Signale s und $s_Q$ begrenzt wird. Insbesondere ist die Genauigkeit über den Verschiebungsweg x konstant, d.h. sie hängt nicht davon ab, ob beispielsweise das Signal s in der Nähe eines Extremums oder eines Flankenverlaufs der Kosinusfunktion liegt.

Die Objektposition x kann dadurch gewonnen werden, dass die Anzahl N der Inkremente a/4 gezählt und die Signale s und $s_Q$ gemäß der Gleichung

$$x = a\left[N + \frac{1}{4} + \frac{1}{2\pi}\arccos\left(\frac{s}{\sqrt{s^2 + s_Q^2}}\right)\right] \tag{6}$$

verarbeitet werden.

Im Folgenden wird das Prinzip der Quadratur-Detektion auf zeitlich variierende Längenraster 102 erweitert. Zunächst wird die in Fig. 2 veranschaulichte Situation betrachtet, in welcher die Rasterweite a des Längenrasters 102 zeitlich konstant ist und die Position des Längenrasters 102 periodisch in der Zeit moduliert wird. Das normierte Signal ist

$$s = \cos[k(x+x_0(t))] + s_0 . \tag{7}$$

Dabei ist $s_0$ ein beliebiges, zeitkonstantes Hintergrundsignal eines unbestimmten Nullpunktes und $x_0(t)$ bezeichnet die Modulation des Nullpunktes von x in der Zeit. Für den optionalen Spezialfall einer zeitperiodischen Modulation des Nullpunktes von x ergibt sich für $x_0(t)$ der Ausdruck $x_0\cos(\omega t)$, wobei $\omega = 2nf$ und f die Modulationsfrequenz ist. In diesem speziellen Fall folgt

$$s = \cos[kx+kx_0\cos(\omega t)] + s_0$$

und somit
$$\tag{8}$$

$$s = \cos[kx]\cos[kx_0\cos(\omega t)] - \sin[kx]\sin[kx_0\cos(\omega t)] + s_0.$$

Wird im Folgenden ohne Einschränkung der Allgemeinheit eine Situation betrachtet, bei welcher die auf den Nullpunkt des Längenrasters angewandte Amplitudenmodulation sehr viel geringer als die Wellenlänge $\lambda$ ist, d.h. die Bedingung $kx_0 \ll 1$ erfüllt ist, folgt in der Näherung zweiter Ordnung für $kx_0$ der Ausdruck

$$s \approx \cos[kx]\,[1 - (kx_0)^2\,(\cos(\omega t))^2/2] - kx_0\cos(\omega t)\sin[kx] + s_0. \tag{9}$$

Unter Verwendung der Beziehung $(\cos(\omega t))^2 = (\cos(2\omega t) + 1)/2$ kann die obige Beziehung als Summe von drei Termen geschrieben werden

$$s = s_{DC} + s_\omega + s_{2\omega} . \tag{10}$$

Der erste Term $s_{DC}$ stellt eine zeitunabhängige DC Komponente dar, die in der folgenden Form geschrieben werden kann

$$s_{DC} = \cos(kx)(1 - (kx_0/2)^2) + s_0 . \tag{11}$$

Der zweite Term $s_\omega$ ist eine zeitvariable Komponente, die eine periodische Oszillation mit der Modulationsfrequenz f gemäß

$$s_\omega = \{-kx_0 \cos(\omega t)\} \sin(kx) \qquad (12)$$

beschreibt, wobei $\omega = 2\pi f$.

Der dritte Term $s_{2\omega}$ ist ebenfalls eine zeitvariable Komponente, die eine periodische Oszillation mit der doppelten Modulationsfrequenz, d.h. 2f, beschreibt.

$$s_{2\omega} = \{-(kx_0/2)^2 \cos(2\omega t)\} \cos(kx) \ . \qquad (13)$$

Das von dem Detektor 108 gelieferte Ausgangssignal wird nun mit der Modulationsfrequenz f und der doppelten Modulationsfrequenz 2f demoduliert. Für die Demodulation können z.B. Lock-in Verstärker eingesetzt werden. Aus dem Signal s wird durch Demodulation mit der Frequenz f das demodulierte Signal S gemäß

$$S = -kx_0 \sin(kx) \qquad (14)$$

und durch Demodulation mit der Frequenz 2f das demodulierte Signal

$$S_Q = -(kx_0/2)^2 \cos(kx) \qquad (15)$$

erzeugt.

Da die Vorfaktoren $kx_0$ und $(kx_0/2)^2$ bekannt sind, können die beiden demodulierten Signale S und $S_Q$ für eine Quadratur-Detektion entsprechend der Gleichung (6) in der folgenden Weise verarbeitet werden

$$x = a\left[N + \frac{1}{4} + \frac{1}{2\pi} \arccos\left(\frac{S}{\sqrt{S^2 + (2S_Q/kx_0)^2}}\right)\right] \qquad (16)$$

Die Positionsbestimmung kann auch hier durch ein Zählen der Inkremente a/4 während der Objektbewegung und einer Auswertung der Quadratur-Detektionsignale, die hier durch zwei unterschiedliche Demodulationen ein und desselben Messsignals erhalten wurden, vorgenommen werden.

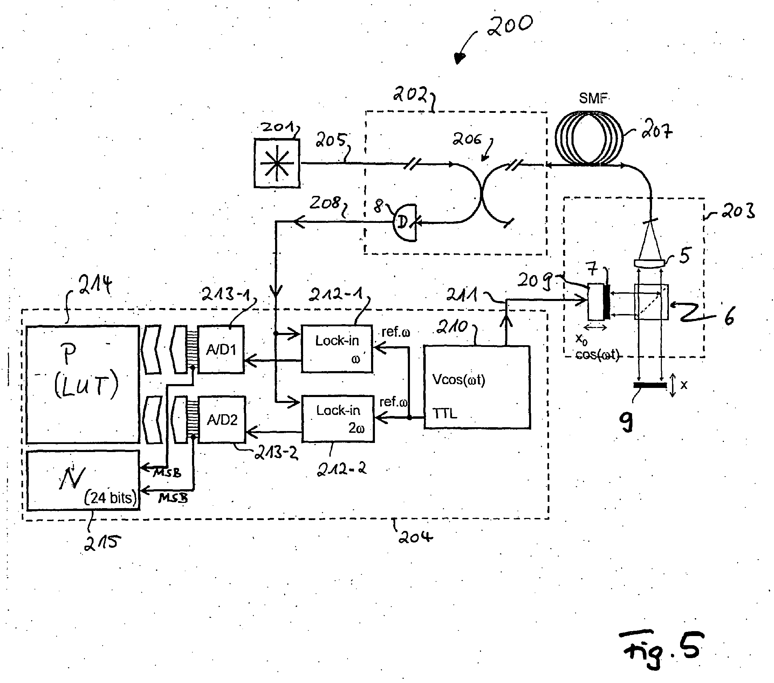

Fig. 5 zeigt in beispielhafter Darstellung eine nicht beanspruchte Positionserfassungsvorrichtung 200, die gemäß den anhand Fig. 2 und der vorstehenden Gleichungen erläuterten Prinzipien arbeitet. Die Positionserfassungsvorrichtung 200 umfasst eine Lichtquelle z.B. in Form eines Lasers 201, eine Detektoranordnung 202, ein Interferometerkopf 203 sowie eine elektronische Auswerteschaltung 204. Der Laser 201 kann beispielsweise ein Laser mit fester Wellenlänge sein. Das Laserlicht wird über eine optische Single-Mode-Faser (SMF) 205 in die Detektoranordnung 202 geleitet. Über einen 2x2 Faserkoppler 206 wird ein Teil des Laserlichtes als Beleuchtungslicht über eine weitere SMF 207 zu dem Interferometerkopf 203 hingeführt. Der Interferometerkopf 203 kann aufgrund seiner Faseranbindung beispielsweise in einem schlecht zugänglichen Bereich, einem abgeschlossenen System usw. in Entfernung von der Detektoranordnung 202 platziert sein.

Der Interferometerkopf 203 weist ein Interferometer vom Michelson-Typ auf. Mittels einer Kollimatorlinse 5 wird das an einem polierten Schrägflächenende der SMF 207 austretende Laser-Beleuchtungslicht aufgeweitet und auf einen Strahlteiler 6 geworfen. Beispielsweise etwa die Hälfte des Lichtes wird zu einem Referenzspiegel 7 geschickt, während der restliche Anteil auf einen Spiegel 9 fällt, welcher an einem Objekt (nicht dargestellt) angebracht ist. Wie in Bezug auf Fig. 1 bereits erläutert, soll die Position bzw. der Verschiebeweg x des Objektes bezüglich einem frei wählbaren Nullpunkt $x_0$ entlang der x-Richtung (siehe Doppelpfeil) erfasst werden. Sowohl das von dem Referenzspiegel 7 reflektierte Licht als auch das von dem Spiegel 9 am Objekt reflektierte Licht werden zurück zu dem Strahlteiler 6 geschickt und von dort über die Kollimatorlinse 5 als Messlicht in die SMF 207 zurückgeleitet. An einem weiteren Ausgang des 2x2 Faserkopplers 206 ist ein optischer Detektor 8 angeschlossen. Dieser Detektor 8 empfängt einen Teil des zurückgeführten Messlichtes, welches an der optisch aktiven Zone im Detektor 8 interferiert. Der Detektor 8 erzeugt ein elektrisches Messsignal 208, welches abhängig von der Intensität des detektierten Interferenzmusters ist und als Funktion des Wegs x mit einer durch λ/2 gegebenen Periode, d.h. der Hälfte der Laserwellenlänge, variiert.

Die zeitliche Modulation des Längenrasters - hier durch das Wellenfeld des Lasers 201 gegeben - kann durch eine Schwingung des Referenzspiegels 7 mit einer Amplitude $x_0\cos(\omega t)$ erzeugt werden. Eine solche Modulation der Position des Referenzspiegels 7 ist äquivalent zu einer Modulation eines Ursprungs des Längenrasters gemäß der Prinzipdarstellung in Fig. 2. Hierfür kann der Referenzspiegel 7 beispielsweise an einem kleinen piezoelektrischen Element 209 gehaltert sein. Das piezoelektrische Element 209 wird von einem Wechselspannungsgenerator 210 getrieben, der über eine Ansteuerleitung 211 mit dem piezoelektrischen Element 209 in Verbindung steht. Dies bewirkt, dass der Referenzspiegel 7 eine Oszillationsbewegung mit der Winkelfrequenz ω ausführt. Da der Referenzspiegel 7 gleichsam den einen Ursprung des auf die Messstrecke angewandten Längenrasters definiert, wird dadurch eine Nullpunktschwingung des Längenrasters gemäß Fig. 2 erzeugt.

Neben dem Wechselspannungsgenerator 210 kann die Auswerteschaltung 204 einen ersten Lock-in Verstärker 212-1 und einen zweiten Lock-in Verstärker 212-2, einen ersten Analog/Digital-Wandler 213-1, einen zweiten Analog/DigitalWandler 213-2, einen Prozessor 214 mit Zugriff auf einen Nachschlag-Tabellenspeicher und einen Aufwärts-/Abwärts-Zähler 215 aufweisen.

Die Demodulationen des Messsignals 208 mit der Winkelfrequenz ω und der Winkelfrequenz 2ω werden in den Lock-in Verstärkern 212-1 bzw. 212-2 durchgeführt. Zu diesem Zweck sind die Referenzeingänge der beiden Lock-in Verstärker 212-1, 212-2 mit einem TTL Referenzausgang des Wechselspannungsgenerators 210 verbunden. Das am Ausgang des Detektors 8 ausgegebene Messsignal 208 wird über die Messsignalleitung in die Signaleingänge der beiden Lock-in Verstärker 212-1 und 212-2 eingespeist. Der erste Lock-in Verstärker 212-1 wird auf die Referenzwinkelfrequenz ω und der zweite Lock-in Verstärker 212-2 wird auf die doppelte Referenzwinkelfrequenz 2ω eingestellt. Der synchron mit ω betriebene erste Lock-in Verstärker 212-1 erzeugt ein demoduliertes Signal S, das proportional zu $\sin(4\pi x/\lambda)$ ist, der synchron zu der Winkelfrequenz 2ω arbeitende zweite Lock-in Verstärker 212-2 liefert ein Quadratur-Detektionsignal $S_Q$, das proportional zu $\cos(4\pi x/\lambda)$ ist. Die beiden Ausgangssignale der Lock-in Verstärker 212-1, 212-2 werden von den Analog/Digital-Wandlern 213-1, 213-2 in digitale Signale gewandelt. Eine erste Auslesung am Ausgang der Analog/Digital-Wandler 213-1, 213-2 ergibt den Verschiebeweg x in Inkrementen von λ/8. Zu diesem Zweck wird jeweils das höchstwertigste Bit MSB (Most Significant Bit) am Ausgang jedes Analog/Digital-Wandlers einem Zähleingang des Aufwärts-/Abwärts-Zählers zugeleitet. Da hier die Rasterweite a = λ/2 ist, wird die Position x durch das nächstliegendste Inkrement $x_N$ nach

$$x_N \;=\; \frac{\lambda}{2}\left(N + \frac{1}{4}\right) \tag{17}$$

ermittelt. Beispielsweise kann als Zähler 215 ein 24-Bit-Zähler mit zwei Zähleingängen verwendet werden.

Für die Berechnung von δx innerhalb eines Inkrements λ/8 wird eine zweite Auslesung der Ausgänge der Analog/Digital-Wandler 213-1, 213-2 von dem Prozessor 214 vorgenommen. Diese zweite Auslesung kann sich über die gesamte Wortbreite der Wandlerausgänge erstrecken. Ein in dem Prozessor 214 enthaltener Interpolator bearbeitet die beiden demodulierten Signale S und $S_Q$ und bestimmt δx gemäß der folgenden Beziehung:

$$\delta x \;=\; \frac{\lambda}{4\pi}\arccos\left(\frac{S}{\sqrt{S^2 + (2S_Q\,/\,(4\pi x_0\,/\,\lambda)\,)^2}}\right) \tag{18}$$

Die Objektposition x wird dann durch die Summe des Ausgangs des Aufwärts-/Abwärts-Zählers 215 und des Interpolators im Prozessor 214 gemäß

$$x \;=\; x_N + \delta x \tag{19}$$

Es wird darauf hingewiesen, dass der Interferometerkopf 203 der Positionserfassungsvorrichtung 200 wesentlich kleiner als der Interferometerkopf 3 der in Fig. 1 gezeigten Positionserfassungsvorrichtung 4 realisiert werden kann. Dies liegt einerseits daran, dass nur ein Interferometer in dem Interferometerkopf 203 untergebracht ist. Des Weiteren kann der Detektor 8 außerhalb des Interferometerkopfes 203 angeordnet und beispielsweise über eine optische Faser 207 mit dem Interferometerkopf 203 verbunden sein. Dies ist bei dem in Fig. 1 gezeigten Doppel-Michelson Interferometer nicht möglich.

Im Folgenden wird die Situation betrachtet, bei welcher die Erfassung der Objektposition x durch eine zeitliche Modulation der Rasterweite a(t) erfolgt. Wie bereits im Zusammenhang mit Fig. 3 erwähnt, ist die zeitliche Modulation der Rasterweite a(t) besonders für Längenraster 102 in Form von Wellenfeldern praktikabel. Das Prinzip ist jedoch auch anwendbar auf Längenraster 102, die durch ein materielles, elastisches Längenrasterelement realisiert sind.

Im Folgenden wird ohne Beschränkung der Allgemeinheit der Spezialfall betrachtet, bei welchem k mit einer periodischen Kosinus-Modulation gemäß $k = k_0 + \delta k \cos(\omega t)$ moduliert wird. Beispielsweise bewirkt die Modulation der Photonenfrequenz eines elektromagnetischen Wellenfeldes eine Modulation von k. Eine Herleitung, die sehr ähnlich zu der in den Gleichungen 7 bis 10 durchgeführten Herleitung ist, ergibt, dass das normierte Messsignal s durch die Summe von Termen

$$S = s_{DC} + s_\omega + s_{2\omega} \qquad (20)$$

angegeben werden kann. Der Term $s_{DC}$ ist eine zeitunabhängige Komponente und ergibt sich zu

$$s_{DC} = \cos(k_0 x)(1 - (x\delta k/2)^2) + s_0 . \qquad (21)$$

Der zweite Term $s_\omega$ ist eine zeitabhängige Komponente, die eine periodische, zeitliche Oszillation mit der Modulationsfrequenz f gemäß

$$s_\omega = \{-x\delta k \cos(\omega t)\} \sin(k_0 x) \qquad (22)$$

vollzieht, wobei $\omega = 2\pi f$. Der dritte Term $s_{2\omega}$ ist ebenfalls eine zeitlich veränderliche Komponente, die eine periodische Oszillation mit der doppelten Modulationsfrequenz, d.h. 2f, darstellt

$$s_{2\omega} = \{-(x\delta k/2)^2 \cos(2\omega t)\} \cos(k_0 x) . \qquad (23)$$

Wie bereits beschrieben werden die beiden zeitveränderlichen Komponenten mit der Frequenz f bzw. der Frequenz 2f demoduliert. Die durch die Demodulation gewonnenen demodulierten Signale sind proportional zu

$$S = -x\delta k \sin(k_0 x) \qquad (24)$$

und

$$S_Q = -(x\delta k/2)^2 \cos(k_0 x) . \qquad (25)$$

Diese beiden demodulierten Signale können einer Quadratur-Detektion-Detektion für die Positions- bzw. Bewegungserfassung des Objektes 101 zugrunde gelegt werden.

Anders als bei der Modulation des Ursprungs des Längenrasters 102 gemäß Fig. 2 sind die Vorfaktoren $x\delta k$ und $(x\delta k/2)^2$ unbekannt, da sie von dem Objektort bzw. dem Verschiebeweg x, d.h. dem gesuchten Wert, abhängen. Die von den demodulierten Signalen S und $S_Q$ auf einem Oszilloskop gebildeten Bahnen (sogenannte Lissajou-Figuren) sind nun Ellipsen, deren Durchmesserverhältnis durch den Ausdruck $x\delta k/4$ gegeben ist. Das Verhältnis der Durchmesser der Ellipse hängt also linear von der Größe x ab. Dies ermöglicht neben der im Folgenden näher erläuterten Bestimmung von x durch eine Inkrementzählung und Interpolation einen weiteren Ansatz zur Bestimmung der Größe x in Form eines absoluten Wertes.

Diese Absolutwertbestimmung der Größe x (bezogen auf den Nullpunkt $x_0$) weist eine begrenzte Genauigkeit auf. Sie kann beispielsweise dadurch erreicht werden, dass das Objekt 101 über eine Rasterweite a (d.h. z.B. eine halbe Wellenlänge eines Lichtfeldes) verfahren wird, um die vollständige Periodizität der demodulierten Signale S und $S_Q$ zu ermitteln. Auf diese Weise lassen sich Maximalwerte $\max(S_Q)$ und $\max(S)$ der Sigale $S_Q$ und S bestimmen und die Größe x kann dann gegenüber dem Nullpunkt $x_0$ des Längenrasters aus dem Verhältnis der Signalbeträge näherungsweise nach $X_{estim} \approx (2/\delta k)\,(\max(S_Q)/\max(S))$ ermittelt werden. Alternativ ist es auch möglich, den Nullpunkt $x_0$ des Längenrasters festzuhalten und die Rasterweite des Längenrasters (bzw. die Wellenlänge des Wellenfeldes) zu variieren, um die vollständige Periodizität der demodulierten Signale S und $S_Q$ zu verfolgen und so die Maximalwerte $\max(S_Q)$ und $\max(S)$ zu ermitteln. In diesem Fall muss das Objekt 101 nicht verschoben werden, um seine absolute Position zu ermitteln.

In der Nähe einer so ermittelten Position $x_{estim}$ kann eine höhere Genauigkeit durch eine Auswertung der Quadratur-Detektionssignale $S \approx -x_{estim}\delta k \sin(k_0 x)$ und $S_Q \approx (x_{estim}\delta k/2)^2 \cos(k_0 x)$ erzielt werden. Unter Verwendung dieser Quadratur-Detektion-demodulierten Terme ergibt sich die Position x mit einer Genauigkeit, die wesentlich kleiner als die Rasterweite (bzw. halbe Wellenlänge) ist zu

$$x = \lambda\left[N + \frac{1}{4} + \frac{1}{2\pi}\arccos\left(\frac{S}{\sqrt{S^2 + (2S_Q/x_{estim}\delta k)^2}}\right)\right] . \qquad (26)$$

Dabei bezeichnet N den Zählwert der Inkremente von a/2 (bzw. $\lambda/4$), der während einer Verschiebung x erhalten wurde.

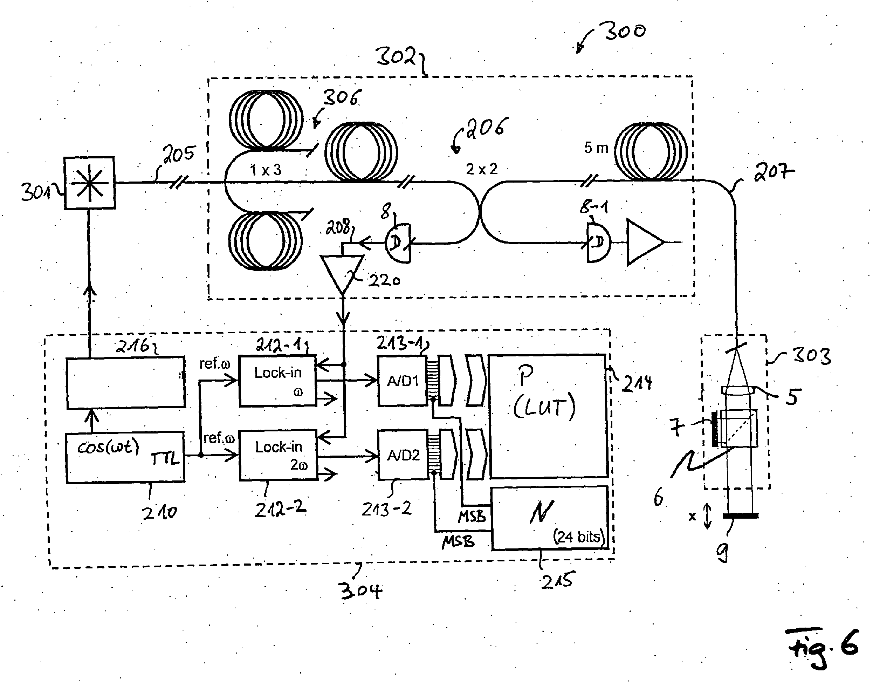

Fig. 6 zeigt eine nicht beanspruchte Positionserfassungsvorrichtung 300, die ebenfalls ein Michelson Interferometer nutzt. Die Positionserfassungsvorrichtung umfasst eine durchstimmbare Lichtquelle, die beispielsweise in Form eines durchstimmbaren Lasers 301 ausgeführt ist, eine Detektoranordnung 302, einen Interferometerkopf 303 und eine Auswerteschaltung 304. Gleiche oder ähnliche Komponenten wie in den vorhergehenden Figuren werden mit den gleichen Bezugszeichen bezeichnet. Das von dem durchstimmbaren Laser 301 erzeugte Laserlicht wird über eine SMF 205 zu der Detektoranordnung 302 geführt. Die Detektoranordnung 302 kann eingangsseitig einen 1×M Koppler 306 aufweisen, welcher M unabhängige Laserausgänge bereitstellt, die dieselbe Wellenlängen-Modulation bieten. Wird beispielsweise eine Überwachung der Objektbewegung in drei Dimensionen durchgeführt, kann M = 3 gewählt werden. An den beiden freien Ausgängen des 1x3 Kopplers 306 können in diesem Fall zwei weitere interferometrische Positionserfassungsvorrichtungen angeschlossen werden.

Einer der Ausgänge des 1×M Kopplers 306 wird dem 2x2 Koppler 206 zugeleitet. Wie bereits im Zusammenhang mit der Positionserfassungsvorrichtung 200 beschrieben, wird der eine Ausgang des 2x2 Kopplers 206 über eine SMF 207 mit einem Schrägflächenende in den Interferometerkopf 303 eingekoppelt. Der Interferometerkopf 303 ist identisch mit dem Interferometerkopf 203 mit der Ausnahme, dass der Referenzspiegel 7 in dem Interferometerkopf 303 ortsfest gehaltert ist. Zur Vermeidung von Wiederholungen wird auf die Beschreibung des Interferometerkopfes 203 verwiesen.

Das von dem Interferometerkopf 303 über die SMF 207 zurückgeleitete Licht interferiert in der bereits beschriebenen Weise in dem Detektor 8. Gemäß der vorhergehenden Beschreibung erzeugt der Detektor 8 ein Messsignal 208, das nach einer optionalen Verstärkung in einem Verstärker 220 der Auswerteschaltung 304 zugeleitet wird. Die Auswerteschaltung 304 ist in Bezug auf den Wechselspannungs-Generator 210, die Lock-in Verstärker 212-1 und 212-2, die Analog/Digital-Wandler 213-1, 213-2, den Prozessor 214 sowie den Aufwärts-/Abwärts-Zähler 215 identisch zu der Auswerteschaltung 204 der Positionserfassungsvorrichtung 200 ausgeführt. Zusätzlich umfasst die Auswerteschaltung 304 jedoch einen Laser-Treiber 216, der gleichzeitig eine Temperatursteuerung des abstimmbaren Lasers 301 vornimmt. Ein Eingang des Laser-Treibers 216 steht mit dem Signalausgang des Wechselspannungs-Generators 210 in Verbindung. Ein Ausgang des Laser-Treibers 216 ist mit einem Abstimmeingang des abstimmbaren Lasers 301 verbunden. Der abstimmbare Laser 301 kann beispielsweise ein DFB (Distributed Feedback) Laser sein, der z.B. mit einer Zentralfrequenz bei 1500 nm arbeitet. Der Laser 301 ist durch Verwendung eines Faraday-Isolators z.B. mit 35 db isoliert, um zu vermeiden, dass er durch reflektiertes Licht beschädigt oder instabil wird. Mittels des Laser-Treibers 216 wird bewirkt, dass der abstimmbare Laser 301 eine Wellenlängen-Modulation gemäß $\lambda = \lambda_0 + \delta\lambda\cos(\omega t)$ vornimmt. Da die Rasterweite a eines Michelson Interferometers durch $\lambda/2$ gegeben ist, wird durch diese Längenwellen-Modulation die Rasterweite a(t) des von dem Wellenfeld im Interferometerkopf 303 repräsentierten Längenrasters 102 mit der Kreisfrequenz $\omega$ moduliert.

Die Signalverarbeitung in der Auswerteschaltung 304 erfolgt analog zu der Signalprozessierung in der Auswerteschaltung 204. Zur Vermeidung von Wiederholungen wird auf die vorhergehende Beschreibung Bezug genommen.

Das demodulierte Ausgangssignal des ersten Lock-in Verstärkers 212-1 ergibt ein Signal S = -x$\delta$k sin($k_0$x) ist. Das demodulierte Ausgangssignal des zweiten Lock-in Verstärkers 212-2 ergibt ein Quadratur-Detektionssignal $S_Q$ gemäß $S_Q$ = -(x$\delta$k/2)$^2$ cos(kox). Unter der optionalen Bedingung $\delta\lambda \ll \lambda_0$ kann bei einem Michelson Interferometer mit modulierter Wellenlänge der Faktor $\delta$k durch den Ausdruck Bedingung $\delta$k = -4$\pi\delta\lambda$/($\lambda_0$)$^2$ approximiert werden. Sowohl der Ausgang S als auch der Ausgang $S_Q$ werden in der bereits beschriebenen Weise von den Analog/Digital-Wandlern 213-1 und 213-2 in digitale Datenwerte umgesetzt. Analog der Beschreibung der Auswerteschaltung 204 wird durch Auslesen der MSBs der Zählwert N bestimmt, welcher die gesuchte Größe x durch $x_N$ gemäß der Gleichung 17 mit einer inkrementalen Genauigkeit von $\lambda$/8 annähert. Die durch Interpolation der demodulierten Signale S und $S_Q$ gewonnene Größe $\delta$x ergibt sich wiederum nach Gleichung 18. Die Position x folgt aus der Summe der inkrementalen Approximation und der Interpolations-Berechnung nach Gleichung 19.

Die in Fig. 6 dargestellte Positionserfassungsvorrichtung 300 weist einen Interferometerkopf 303 ohne bewegliche Teile auf, der darüber hinaus mit der Detektoranordnung 302 über eine SMF 207 verbindbar ist. Infolgedessen ist die Positionserfassungsvorrichtung 300 miniaturisierbar und für vielfältige Einsatzzwecke, darunter die genannten und andere, einsetzbar.

Es wird darauf hingewiesen, dass die Detektoranordnung 302 einen weiteren Detektor 8-1 umfassen kann, dessen Ausgangssignal in anderer Weise ausgewertet wird. Darüber hinaus kann der Prozessor 214 die (grobe) Bestimmung des Absolutwertes der Größe x vornehmen. Hierfür sind lediglich die maximalen Signalamplituden der beiden demodulierten Signale S und $S_Q$ ins Verhältnis zu setzen.

Ferner wird darauf hingewiesen, dass in bestimmten Anwendungsgebieten eine grobe Bestimmung des Absolutwertes der Objektposition x ausreichend sein kann. In diesem Fall kann sowohl auf die interpolative Auswertung in dem Prozessor 214 als auch auf die inkrementale Auswertung in dem Zähler 215 verzichtet werden. Ferner ist es auch möglich, auf die in dem Prozessor 214 durchgeführte Interpolation zu verzichten und die Objektposition allein aus der inkrementalen Größe $x_n$ zu bestimmen.

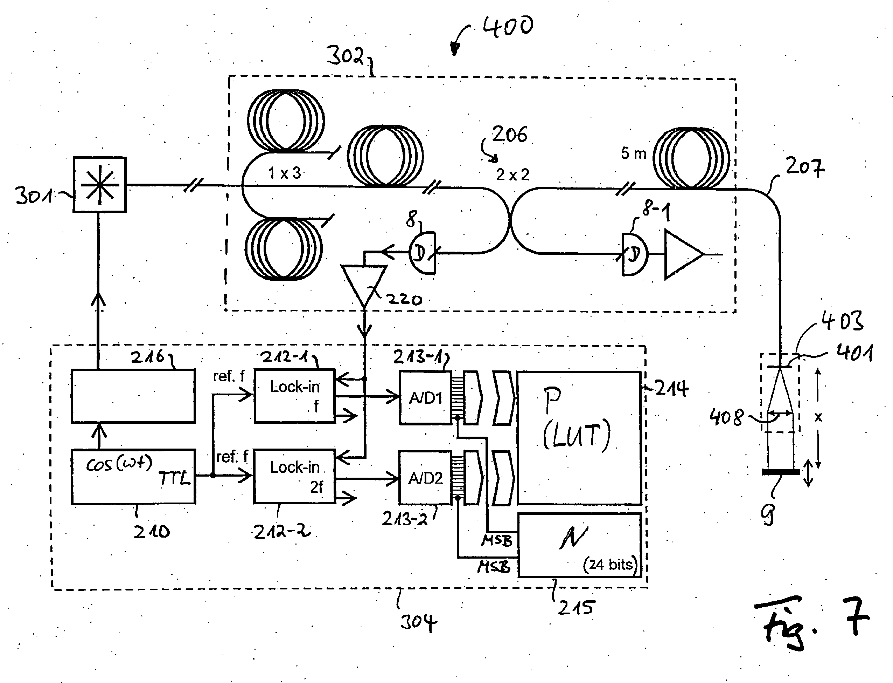

Fig. 7 zeigt eine Positionserfassungsvorrichtung 400 nach der Erfindung. Die Positionserfassungsvorrichtung 400 unterscheidet sich von der Positionserfassungsvorrichtung 300 dadurch, dass anstelle des Michelson Interferometerkopfes 303 ein Fabry-Perot Interferometerkopf 403 eingesetzt wird. Ansonsten können die bereits beschriebenen Komponenten (durchstimmbare Laser 301, Detektoranordnung 302, Auswerteschaltung 304) Verwendung finden. Zur Vermeidung von Wiederholungen wird auf die zugehörige Beschreibung Bezug genommen.

Der Interferometerkopf 403 umfasst ein Fabry-Perot Interferometer, welches aus zwei Spiegeln 401, 9 besteht, zwischen denen ein optischer Resonator aufgebaut ist. Wie im Folgenden noch näher erläutert wird, ist ein Fabry-Perot Interferometer mit geringer Finesse gewünscht. Ein solches Fabry-Perot Interferometer kann in einfacher Weise dadurch realisiert sein, dass ein ebenes poliertes Ende 401 der SMF 207 als einer der Spiegel des Fabry-Perot Interferometers verwendet wird. Im Lichtweg hinter diesem Spiegel 401 kann sich eine Kollimatorlinse 408 befinden. Der zweite Spiegel 9 des Fabry-Perot Interferometers kann an dem zu überwachenden Objekt (nicht dargestellt) angebracht sein. Die Messstrecke befindet sich in dem Resonator, d.h. zwischen den beiden Spiegeln 401 und 409.

Um eine geringe Finesse zu erreichen, kann wenigstens einer der Spiegel 401, 409 einen geringen Reflexionsgrad aufweisen. Typischerweise liegt der Reflexionsgrad eines ebenen polierten Endes einer optischen Faser im Bereich von 4% und weist somit die gewünschte niedrige Reflexivität auf. Eine andere Möglichkeit besteht darin, den dem Objekt zugeordneten Spiegel 9 mit einem geringen Reflexionsgrad auszustatten. In manchen Fällen kann einfach das von einer Oberfläche des Objekts reflektierte Licht verwendet werden.

Die Intensität des reflektierten Lichtes an dem Detektor 8 ist proportional zu dem Reflexionsgrad des Fabry-Perot Interferometers, der durch den Ausdruck

$$\mathtt{Reflexionsgrad} = \frac{g^2\ \sin^2(2\pi x\ /\ \lambda)}{1 + g^2\ \sin^2(2\pi x\ /\ \lambda)} \tag{27}$$

definiert ist. Die Finesse F = ($\pi$g/2)$^{1/2}$ ist dabei durch g$^2$ = 4R/(1-R)$^2$ bestimmt. Dabei bezeichnet R den effektive Reflexionsgrad, der sich aus dem Reflexionsgrad $R_1$ des Spiegels 401 und dem Reflexionsgrad $R_2$ des Spiegels 9 gemäß R = ($R_1R_2$)$^{1/2}$ ergibt. Sofern g$^2 \ll$ 1 gilt, kann der Nenner in erster Näherung ignoriert werden und die Reflexionsgrad erfüllt die folgende Proportionalität

$$\text{Reflexionsgrad} \cong g^2 \sin^2(2\pi x / \lambda), \quad (g^2 \ll 1)$$

was äquivalent ist zu                                                                                               (28)

$$\text{Reflexionsgrad} \cong g^2 (1 - \cos(4\pi x / \lambda)) / 2$$

Der Detektor 8 misst daher ein Signal mit einem variierenden Anteil cos(kx) mit k = $4\pi/\lambda$, d.h. mit einer Rasterweite $\lambda/2$. Dies ist identisch zu der Rasterweiste eines Michelson Interferometers gemäß Fig. 6, d.h. die Signalauswertung kann in exakt derselben Weise erfolgen, wie dies in Bezug auf die Fig. 6 beschrieben wurde. Sämtliche Angaben, insbesondere auch hinsichtlich der Möglichkeit der Bestimmung eines Absolutwertes für die Objektposition x durch einen Amplitudenvergleich der demodulierten Signale S und $S_Q$, gelten gleichermaßen für die Positionserfassungsvorrichtung 400. Die Finesse F des Fabry-Perot Interferometers ist daher kleiner als 1,0 oder 0,5. Je höher der Wert der Finesse, desto schwieriger wird die Signalauswertung, da die Trajektorien auf dem Oszilloskop mit steigender Finesse immer weiter von der Ellipsenform abweichen. Dies führt zu Positionsfehlern oder zu einem wesentlich erhöhten Aufwand bei der Signalauswertung.

Der Interferometerkopf 403 weist einen denkbar einfachen Aufbau auf und ist in hohem Maße miniaturisierbar. Es eröffnen sich eine Vielzahl neuer Einsatzgebiete, insbesondere für eine hochgenaue Positionsmessung in kleinbauenden Positionierern in abgeschlossenen Systemen.

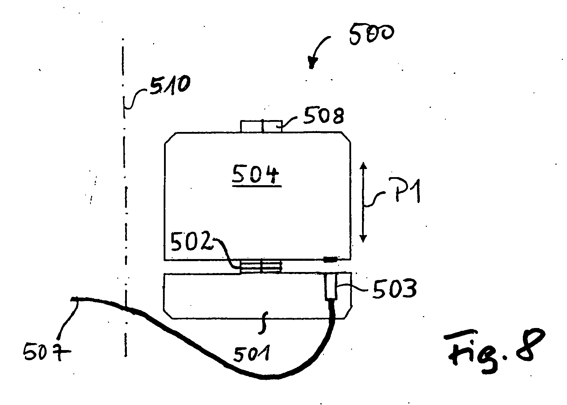

Die Positionserfassungseinrichtung kann beispielsweise zur Überwachung der Positionierbewegung eines solchen Positionierers mit einer Positioniergenauigkeit im Sub-Millimeter-Bereich oder im Sub-Mikrometer-Bereich eingesetzt werden. In Fig. 8 ist in Draufsicht ein Positionierer 500 für Translationsbewegungen mit einer erfindungsgemäßen Positionserfassungseinrichtung dargestellt. Der Positionierer 500 weist ein erstes, lagefestes Teil 501 und ein gegenüber dem ersten Teil 501 verschiebliches zweites Teil auf, welches nachfolgend als Träger 504 bezeichnet wird. Zwischen dem ersten Teil 501 und dem Träger 504 wirkt eine Relativlage-Verstelleinrichtung, die z.B. durch eine Translationsachse 508, auf welcher der Träger 504 gleiten kann, und ein als Aktuator wirkendes Piezoelement 502 realisiert sein kann. Die Richtung der Translationsbewegung wird durch einen Doppelpfeil P1 veranschaulicht.

Der hier dargestellte Antrieb wird als sogenannter Trägheitsmotor oder auch als Slip-Stick-Antrieb bezeichnet. Bei Slip-. Stick-Antrieben, aber auch bei anderen Konstruktionstypen, ist die Schrittweite einer Positionierbewegung nicht exakt über die Ansteuerung des Antriebs definierbar. Dies bedeutet, dass eine Lagebestimmung eines auf dem Träger 504 angeordneten Positionierteils im Positionierer 500 nicht allein anhand einer Überwachung der Antriebssteuerung (z.B. einer Schrittzählung) durchgeführt werden kann, sondern dass der Positionierer 500 zusätzlich mit einer Vorrichtung ausgerüstet sein muss, welche eine Überwachung der Positionierlage ermöglicht.

Zu diesem Zweck ist eine Positionserfassungseinrichtung gemäß einem der vorhergehenden Ausführungsbeispiele vorgesehen. An dem lagefesten ersten Teil 501 ist ein Interferometerkopf 503 gehalten, der gemäß einem der vorhergehenden Ausführungsbeispiele ausgeführt sein kann. Das aus dem Interferometerkopf 503 austretende Beleuchtungslicht fällt auf einen an dem verschieblichen Träger 504 angebrachten Spiegel 509, welcher senkrecht zur Bewegungsrechtung (Doppelpfeil P1) orientiert ist und das Licht zum Interferometerkopf 503 zurück reflektiert. Der Interferometerkopf 503 ist über eine optische Faser 507 mit einer Detektoranordnung (nicht dargestellt) verbunden, die gemäß einem der vorhergehenden Ausführungsbeispiele ausgeführt sein kann und mit den weiteren zuvor beschriebenen Komponenten (Laser, Auswerteschaltung) in Verbindung steht.

Die strichpunktierte Linie 510 repräsentiert eine Systemgrenze, wie sie beispielsweise durch eine Wandung eines Kryostaten oder eines anderen Behältnisses realisiert sein kann. Es wird deutlich, dass lediglich der Interferometerkopf (ohne Detektorelemente) innerhalb des abgeschlossenen Systems untergebracht sein muss und - wie in Fig. 8 dargestellt - auch in ein Bauteil des Positionierer 500 integriert werden kann. Daher ist der Positionierer 500 in Extremumgebungen wie beispielsweise Tieftemperatur, Ultrahochvakuum (UHV) oder hohe elektrische oder magnetische Felder einsetzbar, in denen die Funktionsfähigkeit bekannter Positionierer häufig nicht in der gewünschten Weise erhalten bleibt.

Bei dem Translations-Positionierer 500 kann eine optische Auflösung von z.B. weniger als 5 nm erreicht werden. Die Schrittgröße ist in Abhängigkeit von der Spannung zur Ansteuerung des Piezoelementes 502 und in Abhängigkeit von der Temperatur zwischen etwa 5 nm und 1 $\mu$m variierbar. Aufgrund der hohen Auflösung der optischen Lageüberwachung kann also eine Positioniergenauigkeit im Bereich der mechanischen Grenzen des Antriebs (etwa 5 nm) erreicht werden. Besonders vorteilhaft für viele Anwendungen ist der lange maximale Bewegungsweg, der in der Regel mehrere Millimeter bis hin zu ein oder mehreren Zentimetern betragen kann.

**EP 2 045 572 B1**

**Patentansprüche**

1. Vorrichtung zur Positionserfassung, welche umfasst:

    eine durchstimmbare Lichtquelle (301) zur Erzeugung eines Wellenfeldes in einer Messstrecke,
    eine Wellenfeld-Variationseinrichtung (216) zur zeitlichen Variation der Wellenlänge des Wellenfeldes,
    ein Fabry-Perot Interferometer (403,9), welches ein von der Messstreckenlänge abhängiges Interferenzmuster des Wellenfeldes erzeugt,
    einen Detektor (8) zur Erzeugung eines Messsignals in Abhängigkeit von dem detektierten Interferenzmuster, und
    eine Auswerteschaltung (304), welche das Messsignal (208) in Abhängigkeit von der zeitlichen Variation auswertet,
    wobei die Finesse des Fabry-Perot Interferometers (403,9) kleiner als 1,0, insbesondere kleiner als 0,5 ist.

2. Vorrichtung nach Anspruch 1, ferner umfassend einen Lichtleiter (207), über den von der Lichtquelle (301) erzeugtes Licht in das Fabry-Perot Interferometer (403,9) einkoppelbar ist, und wobei der Detektor (8) über den Lichtleiter (207) mit dem Fabry-Perot Interferometer (403,9) gekoppelt ist.

3. Vorrichtung nach einem der Ansprüche 1 oder 2, wobei die Auswerteschaltung (304) ausgelegt ist, das Messsignal (208) mit einer ersten Frequenz zu demodulieren, die von der zeitlichen Variation abhängig ist.

4. Vorrichtung nach einem der Ansprüche 1 bis 3, wobei die Auswerteschaltung (304) ausgelegt ist, das Messsignal (208) mit einer ersten Frequenz zu demodulieren, die von der zeitlichen Variation abhängig ist, und das Messsignal (208) mit einer zweiten Frequenz zu demodulieren, die von der zeitlichen Variation abhängig und unterschiedlich zu der ersten Frequenz ist.

5. Vorrichtung nach einem der Ansprüche 1 bis 4, wobei die Wellenfeld-Variationseinrichtung (216) ausgelegt ist, die zeitliche Variation des Wellenfeldes mit einer Variationsfrequenz f durchzuführen und die Auswerteschaltung (304) ausgelegt ist, das Messsignal (208) mit den Frequenzen f und 2f zu demodulieren.

6. Vorrichtung nach Anspruch 5, wobei die Auswerteschaltung (304) die Messstreckenlänge durch Inkremetalzählung und Interpolation aus den mit den Frequenzen f und 2f demodulierten Signalen ($S$, $S_Q$) gewinnt.

7. Vorrichtung nach Anspruch 5, wobei die Auswerteschaltung (304) die Messstreckenlänge durch Maximalwertbildung ($max(S)$, $max(S_Q)$) der mit den Frequenzen f und 2f demodulierten Signalen ($S$, $S_Q$) und Quotientenbildung der Maximalwerte gewinnt.

8. Anordnung aus einem Positionierer und einer Vorrichtung zur Positionserfassung, welche umfasst:

    den Positionierer (500) und eine Vorrichtung zur Positionserfassung gemäss einem der vorhergehenden Ansprüche.

9. Anordnung nach Anspruch 8, wobei der Positionierer (500) ein Positionierer (500) mit einer Schrittweitengenauigkeit von unter 1 mm, insbesondere unter 1 μm ist.

10. Anordnung nach Anspruch 8 oder 9, wobei der Positionierer (500) ein erstes, lagefestes Teil (501) und ein gegenüber dem ersten Teil verschiebliches zweites Teil (504) aufweist, und das erste Teil (501) einen Interferometerkopf (503) des Fabry-Perot Interferometers haltert.

11. Anordnung nach Anspruch 10, wobei zwischen dem ersten Teil (501) und dem zweiten Teil (504) eine Relativlage-Verstelleinrichtung wirkt, welche eine Translationsachse (508), auf welcher das zweite Teil (504) gleiten kann, und ein als Aktuator wirkendes Piezoelement (502) aufweist.

**Claims**

1. Apparatus for position detection, which comprises:

a tuneable light source (301) for producing a wave field in a measurement section,
a wave field variation device (216) for temporal variation of the wavelength of the wave field,
a Fabry-Perot interferometer (403,9) which produces an interference pattern of the wave field in dependence on the measurement section length,
a detector (8) for producing a measurement signal as a function of the detected interference pattern, and an evaluation circuit (304) which evaluates the measurement signal (208) as a function of the temporal variation, in which the finesse of the Fabry-Perot interferometer (403,9) is smaller than 1.0, in particular smaller than 0.5.

2. Apparatus according to Claim 1, further comprising a light guide (207) via which the light produced by the light source (301) can be coupled into the Fabry-Perot interferometer (403,9), and it being possible to couple the detector (8) to the Fabry-Perot interferometer (403,9) via the light guide (207).

3. Apparatus according to either of Claims 1 and 2, in which the evaluation circuit (304) is designed to demodulate the measurement signal (208) with a first frequency which is a function of the temporal variation.

4. Apparatus according to one of Claims 1 to 3, in which the evaluation circuit (304) is designed to demodulate the measurement signal (208) with a first frequency which is a function of the temporal variation, and to demodulate the measurement signal (208) with a second frequency which is a function of the temporal variation and differs from the first frequency.

5. Apparatus according to one of Claims 1 to 4, in which the wave field variation device (216) is designed to carry out temporal variation of the wave field with a variation frequency f, and the evaluation circuit (304) is designed to demodulate the measurement signal (208) with the frequencies f and 2f.

6. Apparatus according to Claim 5, in which the evaluation circuit (304) obtains the measurement section length by incremental counting and interpolation from the signals $(S, S_Q)$ demodulated with the frequencies f and 2f.

7. Apparatus according to Claim 5, in which the evaluation circuit (304) obtains the measurement section length by maximum value formation $(\max(S), \max(S_Q))$ of the signals $(S, S_Q)$ demodulated with the frequencies f and 2f, and by forming the quotient of the maximum values.

8. Arrangement of a positioner and an apparatus for detecting position, which comprises:

   the positioned (500) and an apparatus for detecting position in accordance with one of the preceding claims.

9. Arrangement according to Claim 8, in which the positioner (500) is a positioner (500) with a step size accuracy of below 1 mm, in particular below 1 $\mu$m.

10. Arrangement according to Claim 8 or 9, in which the positioner (500) has a first, fixed part (501) and a second part (504) which can be displaced relative to the first part, and the first part (501) holds an interferometer head (503) of the Fabry-Perot interferometer.

11. Arrangement according to Claim 10, in which acting between the first part (501) and the second part (504) is a relative position adjustment device which has a translation axis (508) on which the second part (504) can slide, and a piezo element (502) acting as actuator.

**Revendications**

1. Dispositif de détection de position, qui comprend :

   une source de lumière accordable (301) destinée à générer un champ d'onde dans une section de mesure,
   un dispositif de variation de champ d'onde (216) destiné à faire varier dans le temps la longueur d'onde du champ d'onde,
   un interféromètre de Fabry-Pérot (403,9) qui génère un motif d'interférence du champ d'onde dépendant de la longueur de la section de mesure,
   un détecteur (8) pour générer un signal de mesure en fonction du motif d'interférence détecté, et
   un circuit d'évaluation (304) qui évalue le signal de mesure (208) en fonction de la variation temporelle, dans lequel la finesse de l'interféromètre de Fabry-Pérot (403,9) est inférieure à 1,0, et plus particulièrement, inférieure à 0,5.

2. Dispositif selon la revendication 1, comprenant en outre un guide optique (207) par l'intermédiaire duquel la lumière générée par la source lumineuse (301) est injectée dans l'interféromètre de Fabry-Pérot (403,9), et dans lequel le détecteur (8) est couplé (207) à l'interféromètre de Fabry-Pérot (403,9) par l'intermédiaire du guide optique.

3. Dispositif selon la revendication 1 ou 2, dans lequel le circuit d'évaluation (304) est conçu pour démoduler le signal de mesure (208) à une première fréquence qui dépend de la variation temporelle.

4. Dispositif selon les revendications 1 à 3, dans lequel le circuit d'évaluation (304) est conçu pour démoduler le signal de mesure (208) à une première fréquence qui dépend de la variation temporelle, et pour démoduler le signal de mesure (208) à une seconde fréquence qui dépend de la variation temporelle et qui est différente de la première fréquence.

5. Dispositif selon l'une des revendications 1 à 4, dans lequel le dispositif de variation de champ d'onde (216) est conçu pour produire une variation temporelle du champ d'onde à une fréquence de variation f et le circuit d'évaluation (304) est conçu pour démoduler le signal de mesure (208) aux fréquences f et 2f.

6. Dispositif selon la revendication 5, dans lequel le circuit d'évaluation (304) obtient la longueur de la section de mesure par comptage incrémentiel et interpolation à partir des signaux ($S$, $S_Q$) démodulés aux fréquences f et 2f.

7. Dispositif selon la revendication 5, dans lequel le circuit d'évaluation (304) obtient la longueur de la section de mesure par détermination de la valeur maximale ($\max(S)$, $\max(S_Q)$) des signaux ($S$, $S_Q$) démodulés aux fréquences f et 2f et par détermination du quotient des valeurs maximales.

8. Système constitué d'un positionneur et d'un dispositif destiné à détecter la position, qui comprend : le positionneur (500) et un dispositif de détection de position selon l'une des revendications précédentes.

9. Système selon la revendication 8, dans lequel le positionneur (500) est un positionneur (500) ayant une précision de la taille de pas inférieure à 1 mm, et plus particulièrement, inférieure à 1 μm.

10. Système selon la revendication 8 ou 9, dans lequel le positionneur (500) comporte une première partie (501) fixe et une seconde partie (504) mobile par rapport à la première partie, et dans lequel la première partie (501) maintient une tête interférométrique (503) de l'interféromètre de Fabry-Pérot.

11. Système selon la revendication 10, dans lequel un dispositif de réglage de la position relative qui comprend un axe de translation (508) sur lequel peut coulisser la seconde partie (504) et un piézo élément (502) jouant le rôle d'actionneur, agit entre la première partie (501) et la seconde partie (504).

Fig. 1

EP 2 045 572 B1

100-1

102    102a    X    101

105

a    104-1    108    B    f

X    104-2

Fig. 2

100-2

102    102a    X    101

105    B    a(t)    f    B    108

104-1

X    104-2

Fig. 3

Fig. 4

Fig. 5

fig. 6

Fig. 7

EP 2 045 572 B1

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4209260 A1